# EUROPEAN PATENT APPLICATION

(11) **EP 4 773 378 A1**
(43) Date of publication of application: **08.07.2026**
(21) Application number: 24907984.9
(22) Date of filing: 16.12.2024
(51) Int. Cl.: H01M 50/273, H01M 50/282, H01M 50/278, H01M 50/367

(54) **BATTERY PACK AND COVER FOR BATTERY PACK**

(30) Priority: 18.12.2023 KR 20230184745
(71) Applicant: LG Energy Solution, Ltd., Seoul 07335 (KR)
(72) Inventor: KANG, Jae Hyuk, Daejeon 34122 (KR)
(74) Representative: Hoffmann Eitle
(86) International application number: PCT/KR2024/020415
(87) International publication number: WO 2025/135701

(57) **Abstract**

The present invention discloses a battery pack and a cover for the same. The battery pack according to the present invention may include: a pack case having an accommodating space with one open side, the pack case accommodating a plurality of battery modules therein; and a cover covering the one open side of the pack case and provided with a graphene coating layer thereon.

## Description

### [TECHNICAL FIELD]

This application claims the benefit of priority based on Korean Patent Application No. 10-2023-0184745 filed on December 18, 2023, entire content disclosed in the document of the patent applications is included as a part of this specification.

The present invention relates to a battery pack and a cover for the same capable of: rapidly dispersing heat in the cover during thermal runaway; and preventing local heat concentration and flame leakage by preventing explosion due to gas pressure.

### [BACKGROUND ART]

Generally, secondary batteries include an anode, a cathode and an electrolyte, and generate electrical energy using chemical reactions. The use of secondary batteries is gradually increasing due to the advantage of being able to charge and discharge. Since lithium secondary batteries among such secondary batteries have a high energy density per unit weight, lithium secondary batteries are widely used as a power source for electronic communication devices or as a driving source for high-output hybrid vehicles and electric vehicles.

In terms of the shape of these secondary batteries, demand is increasing for prismatic secondary batteries and pouch-shaped secondary batteries that may be applied to products such as mobile phones due to their thin thickness. In terms of materials of secondary batteries, demand is increasing for lithium secondary batteries such as lithium-ion batteries and lithium-ion polymer batteries with high energy density, discharge voltage and output stability.

Currently, the types of widely-used secondary batteries include lithium-ion batteries, lithium polymer batteries, nickel-cadmium batteries, nickel-metal hydride batteries, and nickel-zinc batteries. The operating voltage of such battery cells is approximately 2.5V to 4.2V. When a higher output voltage is required, multiple battery cells may be connected in series to form a battery module, and multiple battery modules may be connected to form a battery pack. In addition, multiple battery cells may be connected in parallel to form a battery pack according to the charge and discharge capacity required for the battery pack. Accordingly, the number of battery cells and the electrical connection structure of the battery pack may be selected in various ways according to the required output voltage or charge and discharge capacity.

An electric vehicle may be subjected to unexpected shock and vibration on the battery pack during operation. When such shock and vibration are applied to the battery pack, the electrical connection between the battery modules may be disconnected or the pack case supporting the battery module may be deformed. Therefore, a battery pack for an electric vehicle requires sufficient durability and rigidity against external shock and vibration.

The battery pack increases durability and rigidity by installing multiple package beams inside the battery case. The package beam is installed across the inside of the tray that constitutes the pack case and is also a structure that divides the space for installing the battery module in the tray. The tray with the package beam installed has increased impact resistance and is not easily deformed by external shock or vibration.

It is important for the battery pack including multiple battery modules to easily release the heat generated from each battery module. There are cases where the heat generated from the battery module during the charge and discharge processes of the battery pack is not effectively dissipated. In such case, the battery module may deteriorate as heat accumulates in the battery module. When the deterioration of the battery module accelerates, the battery module may catch fire or explode. Thus, a cooling device and a safety device are installed in a high-output, large-capacity battery pack to cool each battery module.

When thermal runaway occurs in a certain battery module, gas and flame are discharged from the battery module. As the gas and flame rise, the cover is heated. Here, the gas and flame intensively heat a specific area of the cover, and as the cover is locally heated, the softening of the specific area increases. The cover may burst or be damaged as the pressure of the gas is applied to the ductile portion. When the cover bursts or is damaged, flame and gas may be released from the battery pack.

The background art of the present invention is disclosed in Korean Patent Application Publication No. 2021-0127508 (published on October 22, 2021, titled "Battery Pack Including Automatic Separation Bus Bar").

### [DISCLOSURE]

### [TECHNICAL PROBLEM]

In order to solve above-described problems, it is an object of the present invention to provide a battery pack and a cover for the same provided with a graphene coating layer capable of quickly dispersing heat applied to the cover.

It is an object of the present invention to provide a battery pack and a cover for the same capable of preventing the cover from local softening due to heat, thereby preventing the cover from explosion or damage.

It is an object of the present invention to provide a battery pack and a cover for the same capable of changing the shape of a graphene coating layer without using a separate mold.

It is an object of the present invention to provide a battery pack and a cover for the same wherein a center reinforcement and a side reinforcement reinforce the rigidity of the cover while being used as a center ventilation passage.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, a battery pack according to the present invention may include: a pack case having an accommodating space with one open side, the pack case accommodating a plurality of battery modules therein; and a cover covering the one open side of the pack case and provided with a graphene coating layer thereon,

The graphene coating layer may be provided on an inner surface of the cover.

The graphene coating layer may be provided on the entire inner surface of the cover.

The plurality of reinforcements may have a curved shape.

The cover may have a long side and a short side, and the plurality of reinforcements may include: a center reinforcement disposed at a short side center of the cover and extending along the long side of the cover; and a plurality of side reinforcements extending along the short side of the cover and disposed along the long side of the cover.

The center reinforcement may protrude outward to form a center ventilation passage.

The plurality of side reinforcements may protrude outward to form a plurality of side ventilation passages connected to the center ventilation passage.

The cover may include: a cover plate provided with the center reinforcement, the plurality of side reinforcements and the graphene coating layer; and a reinforcement frame laminated on a periphery of the cover plate to reinforce rigidity of the cover plate.

The reinforcement frame may include a plurality of reinforcement panels extending toward the center reinforcement.

The reinforcement panel may be provided with a recessed reinforcement step portion provided between and in contact with the plurality of side reinforcements.

A cover for a battery pack according to the present invention includes: a cover plate provided with a graphene coating layer; and a reinforcement frame laminated on a periphery of the cover plate to reinforce rigidity of the cover plate.

The graphene coating layer may be provided on an inner surface of the cover.

The graphene coating layer may be provided on the entire inner surface of the cover.

The cover plate may have a long side and a short side.

The cover plate may include: a center reinforcement disposed at a short side center of the cover plate and extending along the long side of the cover plate; and a plurality of side reinforcements extending along the short side of the cover plate and disposed along the long side of the cover plate.

The center reinforcement may protrude outward to form a center ventilation passage.

The plurality of side reinforcements may protrude outward to form a plurality of side ventilation passages connected to the center ventilation passage.

The reinforcement frame includes a plurality of reinforcement panels extending toward the center reinforcement.

The reinforcement panel may be provided with a recessed reinforcement step portion provided between and in contact with the plurality of side reinforcements.

### [ADVANTAGEOUS EFFECTS]

According to the present invention, a graphene coating layer is formed on the cover, and the graphene coating layer may quickly disperse the heat applied to the cover. Accordingly, the cover may be prevented from being locally heated by flame and gas during thermal runaway of a battery module.

According to the present invention, since the graphene coating layer quickly disperses the heat applied to the cover, the cover may be prevented from being locally softened by heat, thereby preventing the cover from explosion or damage.

According to the present invention, since the graphene coating layer is formed on the cover, an adhesive is not used on the cover such that the graphene coating layer is not detached from the cover by heat.

According to the present invention, since the graphene coating layer is coated on the surface of the cover, it is not necessary that a separate mold be used to change the shape of the graphene coating layer.

According to the present invention, the center reinforcement may protrude outward to form a center ventilation passage. Accordingly, the center reinforcement may be used as the center ventilation passage while reinforcing the rigidity of the cover.

According to the present invention, a plurality of side reinforcements protrude outward and are connected to the center ventilation passage to form a plurality of side ventilation passages. Accordingly, the plurality of side reinforcements may be used as the side ventilation passages while reinforcing the rigidity of the cover.

According to the present invention, since the reinforcement frame is laminated on the periphery of the cover plate to reinforce the rigidity of the cover plate, gas or flame may be prevented from leaking through the edge of the battery pack.

In addition to the advantageous effects described above, specific effects of the present invention will be described further while describing specific details of the present invention.

### [BRIEF DESCRIPTION OF DRAWINGS]

FIG. 1 is a perspective view schematically illustrating a battery pack according to the present invention.
FIG. 2 is a perspective view schematically illustrating a pack case of the battery pack of FIG. 1.
FIG. 3 is a perspective view schematically illustrating the pack case of FIG. 2 with a battery module accommodated therein.
FIG. 4 is a perspective view schematically illustrating a cover of the battery pack of FIG. 1.
FIG. 5 is an exploded perspective view schematically illustrating a cover of the battery pack of FIG. 1.
FIG. 6 is a perspective view schematically illustrating a cover plate constituting the cover of FIG. 5.
FIG. 7 is a perspective view schematically illustrating a reinforcement frame constituting the cover of FIG. 5.
FIG. 8 is a perspective view schematically illustrating a graphene coating layer constituting the cover of FIG. 5.

### [DESCRIPTION OF REFERENCE NUMERALS]

100: battery pack
102: battery module
110: pack case
111: barrier
112: accommodating space
113: communication groove
114: exhaust holes
120: cover
121: cover plate
122: center reinforcement
122a: center ventilation passage
123: side reinforcement
123a: side ventilation passage
125: reinforcement frame
126: reinforcement panel
127: reinforcement step portion
128: graphene coating layer

### [DETAILED DESCRIPTION OF THE PREFERRED EMBODIMENTS]

Hereinafter, preferred embodiments of the present invention will be described with reference to the accompanying drawings.

The present invention is not limited to the embodiments disclosed hereinafter, and various changes may be applied and may be implemented in various different forms. The embodiment herein is only provided to complete the disclosure of the present invention and to fully inform those skilled in the art of the scope of the invention. Therefore, the present invention is not limited to the embodiments disclosed hereinafter, and it should be understood that the present invention includes all changes and equivalents encompassed in the technical spirit and scope of the present invention as well as substitution or addition of a configuration of one embodiment with that of another embodiment.

The accompanying drawings are only for facilitating understanding of the embodiments disclosed herein, and it should be understood that the technical idea disclosed herein is not limited by the accompanying drawings, and that encompasses all changes, equivalents and substitutions of the spirit and technical scope of the present invention. In the accompanying drawings, while components may be exaggeratedly large or small in size or thickness to facilitate understanding, etc., this should not construe the scope of protection of the present invention as being limited.

Terms used herein are only used to describe specific embodiments or examples, and are not intended to limit the present invention. In addition, the expressions in singular form include expressions in plural form unless the context clearly dictates otherwise. Herein, terms such as "comprise" and "consist of" are intended to designate that features, numbers, steps, operations, components, parts, or combinations thereof described in the specification exist. That is, it should be understood that terms such as "comprise", "consist of' used herein should not preclude the possibility of the presence or addition of one or more other features, numbers, steps, operations, components, parts, or combinations thereof.

While terms including ordinal numbers such as "first" and "second" may be used to describe various components, the components are not limited by the terms. The terms are only used for the purpose of distinguishing one component from another.

It should be understood that when an element is referred to as being "connected" to another element, the element may be directly connected to another element, or there may exist an interposing element in the middle. On the other hand, when an element is referred to as being "directly connected" to another element, it should be understood that there is no interposing element in the middle.

When an element is referred to as being "above" or "under" another element, it should be understood that there may exist an interposing elements in the middle as well as being directly above or under another element.

Unless defined otherwise, all terms used herein, including technical or scientific terms, have the same meaning as commonly understood by those skilled in the art to which the present invention belongs. Terms such as those defined in commonly used dictionaries should be interpreted as having a meaning consistent with the meaning in the context of the related art, and unless explicitly defined herein, terms such as those defined in commonly used dictionaries should not be interpreted in an ideal or excessively formal meaning.

Hereinafter, a battery pack according to an embodiment of the present invention will be described.

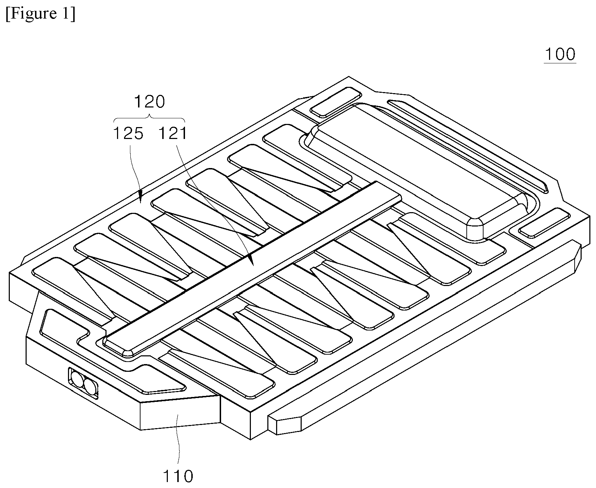

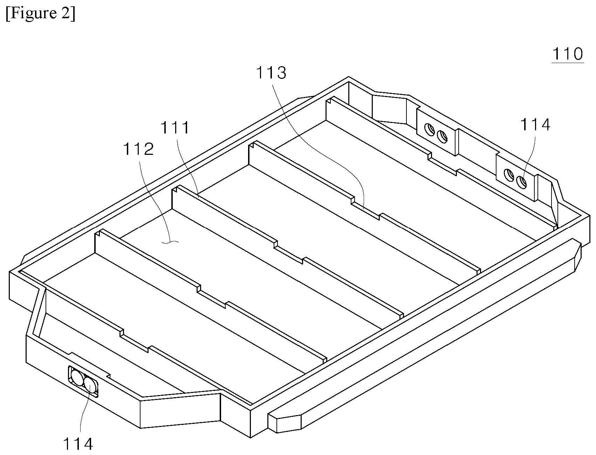

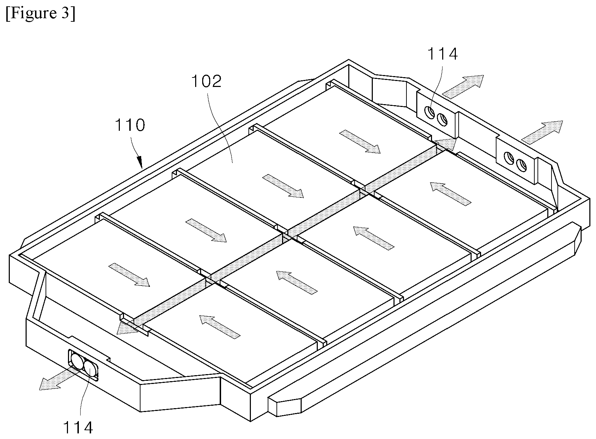

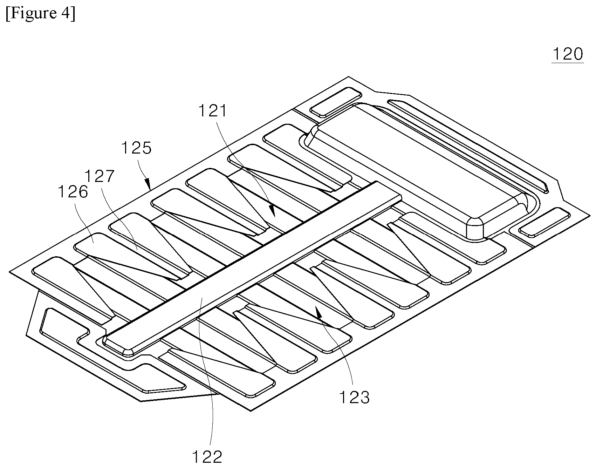

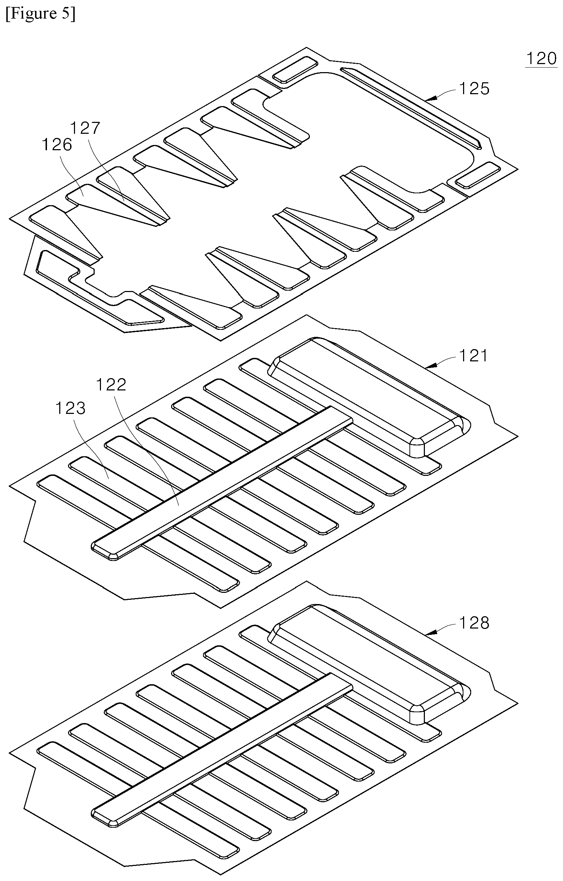

FIG. 1 is a perspective view schematically illustrating a battery pack according to the present invention, FIG. 2 is a perspective view schematically illustrating a pack case of the battery pack of FIG. 1, FIG. 3 is a perspective view schematically illustrating the pack case of FIG. 2 with a battery module accommodated therein, FIG. 4 is a perspective view schematically illustrating a cover of the battery pack of FIG. 1, and FIG. 5 is an exploded perspective view schematically illustrating a cover of the battery pack of FIG. 1.

Referring to FIGS. 1 to 5, a battery pack 100 according to an embodiment of the present invention includes a pack case 110. The entirety of the pack case 110 may be may made of a metal material.

A battery module 102 includes a plurality of battery cells (not shown). The plurality of battery cells may include pouch type cells, rectangular type cells, and cylindrical type cells. The battery module 102 is disposed in the corresponding accommodating space 112.

A plurality of barriers 111 are installed in the pack case 110 to divide the accommodating space 112 wherein the plurality of battery modules 102 are accommodated. The plurality of barriers 111 may be arranged parallel to the short side of the pack case 110 along the long side. The plurality of barriers 111 reinforce the rigidity of the pack case 110. The plurality of barriers 111 may prevent gas and flame from flowing to the adjacent portions in the accommodating space 112 when thermal runaway or transition to thermal runaway occurs. The pack case 110 has one open side. A pack frame is installed to surround the outer surface of the pack case 110. Exhaust holes 114 are formed on the front side and the rear side of the pack frame.

The cover 120 may be installed to cover the one open side of the pack case 110. The cover 120 is coupled to the outer frame of the pack case 110 to define the inner space of the pack case 110. The coupling may be performed by various means such as welding or fastening. A graphene coating layer 128 is provided on the cover 120. The graphene coating layer 128 has a thermal conductivity that is more than twice that of diamond such that heat transfer efficiency and durability are improved. In addition, since the graphene coating layer 128 quickly disperses heat applied to the cover 120, the cover 120 may be prevented from being locally heated by flame and gas when a thermal runaway of any battery module 102 occurs. Accordingly, it is possible to prevent the cover 120 from being locally softened by heat, thereby preventing the cover 120 from explosion or damage. In addition, it is possible to delay or suppress the gas and flame from being discharged out of the battery pack 100 during thermal runaway of the battery pack 100.

Conventionally, a mica sheet may be attached to the inner surface of the cover 120 with an adhesive. In such case, when the battery module 102 undergoes thermal runaway and thermal propagation, the adhesive may melt as the cover 120 is heated, and the mica sheet may be detached. In addition, since the mica sheet is approximately 1 mm thick, the space for gas flow may become relatively narrow. Moreover, since a reinforcement rib is formed in the cover 120 to reinforce the rigidity of the cover 120, the shape of the mica sheet must be matched to that of the cover 120 using a mold. In addition, since the mold must be re-manufactured when the shape of the cover 120 is changed, the manufacturing cost of the battery pack 100 may increase.

In comparison, since the graphene coating layer 128 is provided on the cover 120 of the present invention, an adhesive is not used on the cover 120 such that the graphene coating layer 128 is not detached from the cover 120 due to heat. In addition, since the graphene coating layer 128 is applied to the surface of the cover 120, a separate mold is not necessary. In addition, the graphene coating layer 128 may be applied to various shapes of the cover 120. Furthermore, since very thin graphene coating layer 128 is formed, the space for gas flow in the cover 120 becomes relatively wide, and space utilization may be increased.

The graphene coating layer 128 is provided on the inner surface of the cover 120. The graphene coating layer 128 is formed in stepped manner to correspond to the center reinforcement 122 and side reinforcement 123 of the cover 120 described below. Here, the graphene coating layer 128 may be provided on the entire inner surface of the cover 120. Accordingly, the graphene coating layer 128 may disperse heat throughout the cover 120. In FIG. 5, the graphene coating layer 128 is illustrated as being separated from the cover. However, this is for convenience of description, and the graphene coating layer 128 is actually coated on the cover 120.

The cover 120 may be overall rectangular having a long side and a short side. The shape of the cover 120 corresponds to that of the pack case 110.

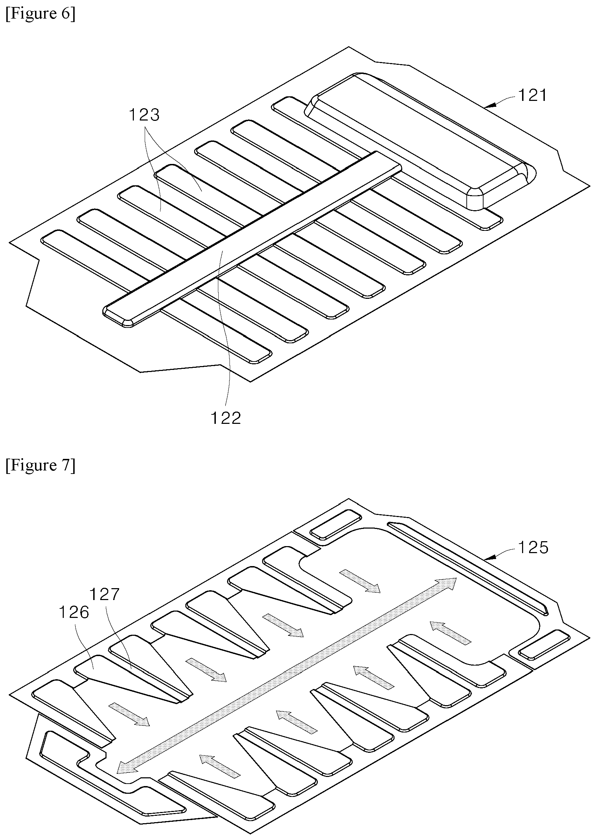

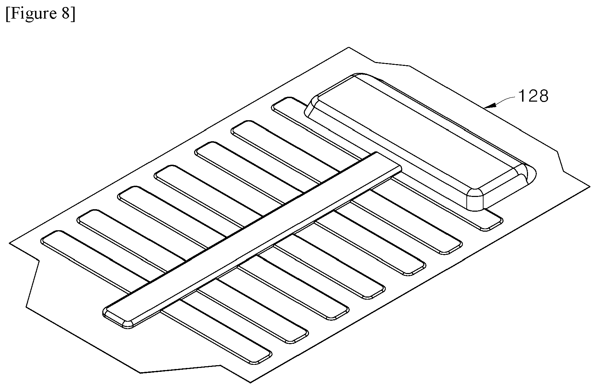

FIG. 4 is a perspective view schematically illustrating the cover of the battery pack of FIG. 1, FIG. 5 is an exploded perspective view schematically illustrating the cover of the battery pack of FIG. 1, FIG. 6 is a perspective view schematically illustrating a cover plate constituting the cover of FIG. 5, FIG. 7 is a perspective view schematically illustrating a reinforcement frame constituting the cover of FIG. 5, and FIG. 8 is a perspective view schematically illustrating the graphene coating layer constituting the cover of FIG. 5

Referring to FIGS. 4 to 8, a plurality of reinforcements 122 and 123 having a curved shape may be provided at the cover 120. The plurality of reinforcements 122 and 123 are formed in stepped manner at the cover 120 to increase the structural rigidity of the cover 120.

The plurality of reinforcements 122 and 123 may include one or more center reinforcements 122 and a plurality of side reinforcements 123. When two rows of battery modules 102 are arranged along the long side in the battery pack 100, one center reinforcement 122 may be provided at the short side center of the battery pack 100. In addition, when three or more rows battery modules 102 are arranged along the long side in the battery pack 100, two or more center reinforcements 122 may be provided at the short side center of the battery pack 100.

The center reinforcement 122 may be provided at the short side center of the cover 120 parallel to the long side of the cover 120. The center reinforcement 122 may be straight. The plurality of side reinforcements 123 may be arranged parallel to the short side of the cover 120 along the long side of the cover 120.

The center reinforcement 122 protrudes to outward to form a center ventilation passage 122a. Here, a communication groove 113 having the same size as the center reinforcement 122 may be provided at the lengthwise center of the plurality of barriers 111. The degree of protrusion of the center reinforcement 122 and the depth of the communication groove 113 may be determined in consideration of the size of the center ventilation passage 122a.

A plurality of side reinforcements 123 protrude outward to form a plurality of side ventilation passages 123a connected to the center ventilation passage 122a. The plurality of side reinforcements 123 may be straight. At least one side reinforcement 123 may correspond to one side of each accommodating space 112. The number of side reinforcements 123 corresponding to the corresponding accommodating space 112 may be selected according to the size of the accommodating space 112. Since the plurality of side ventilation passages 123a are connected to the center ventilation passage 122a, gas and flame generated in the battery module 102 may be discharged out of the battery pack 100 through the plurality of side ventilation passages 123a, the center ventilation passage 122a, and the exhaust holes 114.

According to the embodiment of the present invention, the graphene coating layer 128 prevents softening of the cover 120 due to a local temperature increase, and the plurality of reinforcements 122 and 123 prevent structural damage to the cover 120, thereby providing the battery pack 100 wherein the structural, mechanical and thermal stability of the cover 120 is simultaneously reinforced.

In addition, according to the embodiment of the present invention, since heat is rapidly transmitted and dissipated by the graphene coating layer 128 while gas and flame are discharged by the ventilation passage 122a and 123a, a battery pack 100 is provided capable of preventing thermal runaway, increasing cooling and heat dissipation efficiency, and reducing the risk of explosion, etc.

The cover 120 includes a cover plate 121 and a reinforcement frame 125.

A center reinforcement 122 and a plurality of side reinforcements 123 are provided at the cover plate 121, and a graphene coating layer 128 is also provided. The cover plate 121 is coupled to the periphery of the pack case 110 to cover one side of the pack case 110. The coupling may be achieved by various means such as welding or fastening.

The reinforcement frame 125 is laminated on the periphery of the cover plate 121 to reinforce the rigidity of the cover plate 121. The reinforcement frame 125 may be welded to the cover plate 121 by spot welding, laser welding, or the like. Alternatively, the reinforcement frame 125 may be coupled to the cover plate 121 by means such as fastening. The reinforcement frame 125 may prevent gas or flame from leaking through the edge of the battery pack 100 by reinforcing the rigidity of the periphery of the cover 120.

The reinforcement frame 125 includes a plurality of reinforcement panels 126 extending toward the center reinforcement 122. The reinforcement panels 126 extend toward the center reinforcement 122 in a trapezoidal shape, a triangular shape, etc. Since the reinforcement panels 126 are formed in a trapezoidal shape or a triangular shape, the rigidity of the pack case 110 may be reinforced along the long side of the pack case 110 while preventing the cover 120 from being deformed along the short side of the pack case 110.

A plurality of recessed reinforcement step portion 127 may be provided in the reinforcement panel 126 such that the side reinforcements 123 are in contact with each other. The plurality of reinforcement step portions 127 are straight parallel to the short side of the cover plate 121. The plurality of reinforcement step portions 127 may further improve the rigidity of the cover plate 121 along the short side thereof.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery pack, comprising:
a pack case having an accommodating space with one open side, the pack case accommodating a plurality of battery modules therein; and
a cover covering the one open side of the pack case and provided with a graphene coating layer thereon,
wherein the cover is provided with a plurality of reinforcements protruding outward to form a ventilation passage.

2. The battery pack of claim 1, wherein the graphene coating layer is provided on an inner surface of the cover.

3. The battery pack of claim 2, wherein the graphene coating layer is provided on entire inner surface of the cover.

4. The battery pack of claim 1, wherein the plurality of reinforcements has a curved shape.

5. The battery pack of claim 1, wherein the cover has a long side and a short side, and
the plurality of reinforcements comprise:
a center reinforcement disposed at a short side center of the cover and extending along the long side of the cover to form a center ventilation passage; and
a plurality of side reinforcements extending along the short side of the cover and disposed along the long side of the cover to form a plurality of side ventilation passages connected to the center ventilation passage.

6. The battery pack of claim 5, wherein the cover comprises:
a cover plate provided with the center reinforcement, the plurality of side reinforcements and the graphene coating layer; and
a reinforcement frame laminated on a periphery of the cover plate to reinforce rigidity of the cover plate.

7. The battery pack of claim 6, wherein the reinforcement frame comprises a plurality of reinforcement panels extending toward the center reinforcement.

8. The battery pack of claim 7, wherein the reinforcement panel is provided with a recessed reinforcement step portion provided between and in contact with the plurality of side reinforcements.

9. A cover for a battery pack, comprising:
a cover plate provided with a graphene coating layer and a plurality of reinforcements protruding outward to form a ventilation passage; and
a reinforcement frame laminated on a periphery of the cover plate to reinforce rigidity of the cover plate.

10. The cover of claim 9, wherein the graphene coating layer is provided on an inner surface of the cover.

11. The cover of claim 10, wherein the graphene coating layer is provided on entire inner surface of the cover.

12. The cover of claim 9, wherein the cover plate has a long side and a short side, and
the cover plate comprises:
a center reinforcement disposed at a short side center of the cover plate and extending along the long side of the cover plate to form a center ventilation passage; and
a plurality of side reinforcements extending along the short side of the cover plate and disposed along the long side of the cover plate to form a plurality of side ventilation passages connected to the center ventilation passage.

13. The cover of claim 12, wherein the reinforcement frame comprises a plurality of reinforcement panels extending toward the center reinforcement.

14. The cover of claim 13, wherein the reinforcement panel is provided with a recessed reinforcement step portion provided between and in contact with the plurality of side reinforcements.

15. A battery pack comprising any one of covers of claims 9 to 14.
